# EUROPEAN PATENT APPLICATION

(11) **EP 4 084 219 A1**
(43) Date of publication of application: **02.11.2022**
(21) Application number: 20911216.8
(22) Date of filing: 24.12.2020
(51) Int. Cl.: H01Q 1/36, H01Q 1/22, H01Q 5/35, H01Q 1/44, H01Q 7/00

(54) **ANTENNA DEVICE AND ELECTRONIC DEVICE**

(30) Priority: 31.12.2019 CN 201911421974; 31.12.2019 CN 201922500600 U
(71) Applicant: GUANGDONG OPPO MOBILE TELECOMMUNICATIONS CORP., LTD., Dongguan, Guangdong 523860 (CN)
(72) Inventor: HUANG, Wuxin, Dongguan, Guangdong 523860 (CN); LI, Si, Dongguan, Guangdong 523860 (CN)
(74) Representative: Penza, Giancarlo
(86) International application number: PCT/CN2020/138864
(87) International publication number: WO 2021/136052

(57) **Abstract**

An antenna device and an electronic device, comprising a near field communication chip; a near field communication coil; a first conductor structure; and a second conductor structure. When transmitting differential excitation current, the near field communication coil forms a first near field communication radiation field, the first conductor structure forms a second near field communication radiation field, the second conductor structure forms a third near field communication radiation field, and the first near field communication radiation field is used for enhancing the second near field communication radiation field and the third near field communication radiation field.

## Description

This application claims a priority to a prior Chinese patent application No. 201911421974.6, entitled "ANTENNA DEVICE AND ELECTRONIC DEVICE" filed to the China National Intellectual Property Administration on December 31, 2019, and a priority to a prior Chinese patent application No. 201922500600.5, entitled "ANTENNA DEVICE AND ELECTRONIC DEVICE" filed to the China National Intellectual Property Administration on December 31, 2019, the entire contents of which are incorporated in this application by reference.

### TECHNICAL FIELD

The disclosure relates to the field of communication technologies, and more particularly to an antenna device and an electronic device.

### BACKGROUND

With the development of communication technologies, electronic devices such as smart phones can achieve more and more functions, and communication modes of the electronic devices are more diversified. For example, a general electronic device may support various communication modes such as cellular network communication, wireless fidelity (Wi-Fi) communication, global positioning system (GPS) communication, Bluetooth (BT) communication and the like. In addition, with the progress of communication technologies, recent electronic devices can gradually realize near field communication (NFC). It can be understood that each communication mode of the electronic device requires a corresponding antenna to support.

### SUMMARY

Embodiments of the present disclosure provides an antenna device and an electronic device, which can enhance radiation field intensity of near field communication (NFC) antenna and improve performance of the NFC antenna.

In a first aspect, an embodiment of the present disclosure provides an antenna device, including:
a near field communication chip, configured to provide differential excitation current;
a near field communication coil, disposed on a periphery of a camera module, where the near field communication coil is electrically connected to the near field communication chip;
a first conductor structure, electrically connected to the near field communication coil, where the first conductor structure is grounded; and
a second conductor structure, electrically connected to the near field communication chip, where the second conductor structure is grounded;
where the near field communication coil, the first conductor structure and the second conductor structure are configured to cooperatively transmit the differential excitation current; and when transmitting the differential excitation current, the near field communication coil is configured to form a first near field communication radiation field, the first conductor structure is configured to form a second near field communication radiation field, and the second conductor structure is configured to form a third near field communication radiation field; and the first near field communication radiation field being configured to enhance the second near field communication radiation field and the third near field communication radiation field.

In a second aspect, an embodiment of the present disclosure further provides an electronic device including an antenna device, and the antenna device includes:
a near field communication chip, configured to provide differential excitation current;
a near field communication coil, disposed on a periphery of a camera module and electrically connected to the near field communication chip;
a first conductor structure, electrically connected to the near field communication coil, where the first conductor structure is grounded;
a second conductor structure, electrically connected to the near field communication chip, where the second conductor structure is grounded;
where the near field communication coil, the first conductor structure and the second conductor structure are configured to cooperatively transmit the differential excitation current; and when transmitting the differential excitation current, the near field communication coil is configured to form a first near field communication radiation field, the first conductor structure is configured to form a second near field communication radiation field, and the second conductor structure is configured to form a third near field communication radiation field, the first near field communication radiation field being configured to enhance the second near field communication radiation field and the third near field communication radiation field.

### BRIEF DESCRIPTION OF DRAWINGS

In order to more clearly illustrate technical solutions in embodiments of the present disclosure, the following will briefly introduce the drawings that need to be used in the description of the embodiments. Obviously, the drawings in the following description are only some embodiments of the present disclosure. For those skilled in the art, other drawings can be obtained from these drawings without creative work.
FIG. 1 illustrates a schematic structural diagram of an electronic device according to an embodiment of the present disclosure.
FIG. 2 illustrates a schematic rear view of the electronic device shown in FIG. 1.
FIG. 3 illustrates a schematic structural diagram of a first type connection between an antenna device and a camera module in the electronic device according to an embodiment of the present disclosure.
FIG. 4 illustrates a schematic structural diagram of a first type structure of a rear cover in the electronic device according to an embodiment of the present disclosure.
FIG. 5 illustrates a schematic structural diagram of a second type structure of the rear cover in the electronic device according to an embodiment of the present disclosure.
FIG. 6 illustrates a schematic structural diagram of a third type structure of the rear cover in the electronic device according to an embodiment of the present disclosure.
FIG. 7 illustrates a schematic structural diagram of a fourth type structure of the rear cover in the electronic device according to an embodiment of the present disclosure.
FIG. 8 illustrates a schematic structural diagram of a middle frame of the electronic device according to an embodiment of the present disclosure.
FIG. 9 illustrates a schematic structural diagram of a first type connection between a camera module and a near field communication coil in the electronic device according to an embodiment of the present disclosure.
FIG. 10 illustrates a schematic structural diagram of a second type connection between the camera module and the near field communication coil in the electronic device according to an embodiment of the present disclosure.
FIG. 11 illustrates a schematic structural diagram of a second type connection between the antenna device and the camera module in the electronic device according to an embodiment of the present disclosure.
FIG. 12 illustrates a schematic structural diagram of a third type connection between the antenna device and the camera module in the electronic device according to an embodiment of the present disclosure.
FIG. 13 illustrates a schematic structural diagram of a fourth type connection between the antenna device and the camera module in the electronic device according to an embodiment of the present disclosure.

### DETAILED DESCRIPTION OF EMBODIMENTS

Technical solutions in embodiments of the present disclosure will be clearly and completely described below with reference to the drawings in the embodiments of the present disclosure. Obviously, the described embodiments are only some of the embodiments of the present disclosure, not all of embodiments. Based on the embodiments in the present disclosure, all other embodiments obtained by those skilled in the art without making creative work fall within the protection scope of the present disclosure.

An embodiment of the present disclosure provides an electronic device. The electronic device may be a smart phone, a tablet computer, a game device, an augmented reality (AR) device, an automobile device, a data storage device, an audio player, a video player, a notebook computer, or a desktop computing device, etc.

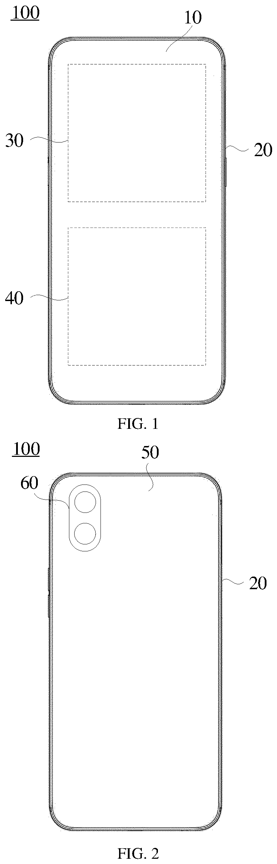

As shown in FIG. 1 and FIG. 2, FIG. 1 illustrates a schematic structural diagram of the electronic device 100 according to the embodiment of the present disclosure, and FIG. 2 illustrates a rear view of the electronic device 100 shown in FIG. 1.

The electronic device 100 may include a display screen 10, a middle frame 20, a circuit board 30, a battery 40, a rear cover 50, and a camera module 60.

The display screen 10 is disposed on the middle frame 20 to form a display surface of the electronic device 100 for displaying information such as images and text. The display screen 10 may include a liquid crystal display (LCD) or an organic light-emitting diode (OLED) display.

It can be understood that the display screen 10 may be a full screen, in this situation, the entire area of the display screen 10 is a display area and does not include a non-display area, or the non-display area on the display screen 10 only occupies a small area for a user, so that the display screen 10 has a large screen ratio. Alternatively, the display screen 10 may be a non-full screen, in this situation, the display screen 10 may include a display area and a non-display area adjacent to the display area. The display area is configured to display information, and the non-display area does not display information.

It can be understood that the display screen 10 may be disposed with a cover plate to protect the display screen 10 from being scratched or damaged by water. The cover plate may be a transparent glass cover plate, so that the user can observe the content displayed on the display screen 10 through the cover plate. It can be understood that the cover plate may be a sapphire glass cover plate.

The middle frame 20 may have a thin plate-like or a sheet-like structure, or may have a hollow frame structure. The middle frame 20 is used to support electronic components or functional components in the electronic device 100 to thereby install the electronic components and the functional components of the electronic device 100 together. For example, the middle frame 20 may be disposed with grooves, protrusion, through holes, and other structures to facilitate installation of the electronic components or the functional components of the electronic device 100. It can be understood that a material of the middle frame 20 may include metal or plastic.

The circuit board 30 is fixed on the middle frame 20, and is sealed inside the electronic device 100 through the rear cover 50. The circuit board 30 may be a main board of the electronic device 100. The circuit board 30 may be integrated with a processor, and may also be integrated with one or more of the functional components such as an earphone interface, an acceleration sensor, a gyroscope, a motor, etc. In this situation, the display screen 10 may be electrically connected to the circuit board 30 to control the display of the display screen 10 through the processor on the circuit board 30.

The battery 40 is disposed on the middle frame 20 and sealed inside the electronic device 100 through the rear cover 50. In this situation, the battery 40 is electrically connected to the circuit board 30 to realize that the battery 40 supplies power to the electronic device 100. The circuit board 30 may be disposed with a power management circuit. The power management circuit is used to distribute a voltage supplied by the battery 40 to each electronic component in the electronic device 100.

The rear cover 50 is connected to the middle frame 20. For example, the rear cover 50 may be bonded to the middle frame 20 by an adhesive such as double-sided tape to realize a connection with the middle frame 20. The rear cover 50, together with the middle frame 20 and the display screen 10, is used to seal the electronic components and the functional components of the electronic device 100 inside the electronic device 100 to protect the electronic components and the functional components of the electronic device 100. It can be understood that the rear cover 50 may be integrally formed. During a forming process of the rear cover 50, an opening may be formed on the rear cover 50, and the opening is used to install a rear camera and other structures. A material of the rear cover 50 may include metal, such as metal copper, metal aluminum, metal silver, etc.

The camera module 60 is disposed on the middle frame 20. For example, the camera module 60 may be mounted on the middle frame 20 for fixation. In this situation, the camera module 60 is electrically connected to the circuit board 30 to control the camera module 60 through the processor on the circuit board 30, such as controlling the camera module 60 to take pictures or record video.

It can be understood that the camera module 60 may be a rear camera module of the electronic device 100. In this case, an opening for installing the camera module 60 may be formed on the rear cover, the camera module 60 is installed on the middle frame 20 through the opening, and the camera module 60 may also collect ambient light signals for imaging through the opening.

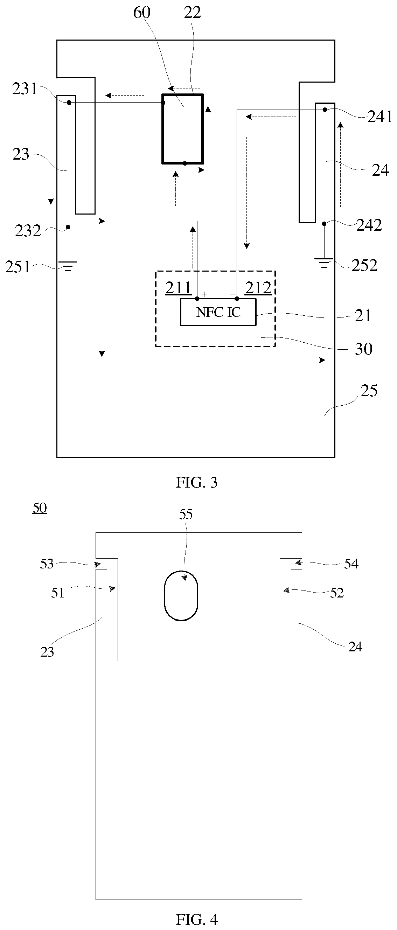

FIG. 3 illustrates a schematic structural diagram of a first type connection between an antenna device and the camera module in the electronic device according to the embodiment of the present disclosure. An antenna device 200 may also be disposed in the electronic device 100. The antenna device 200 is used to realize a wireless communication function of the electronic device 100, for example, the antenna device 200 may be used to realize near field communication (NFC communication). The antenna device 200 is disposed inside the electronic device 100. It can be understood that some components of the antenna device 200 may be integrated on the circuit board 30 inside the middle frame 20. For example, a signal processing chip and a signal processing circuit in the antenna device 200 may be integrated on the circuit board 30. In addition, some components of the antenna device 200 may also be directly disposed on the middle frame 20. For example, a radiator structure or a conductor structure of the antenna device 200 for radiating signals may be directly disposed on the middle frame 20.

The antenna device 200 may include a near field communication chip 21, a near field communication coil 22, a first conductor structure 23, a second conductor structure 24, and a grounding plane 25.

In the description of the present disclosure, it should be understood that terms such as "first" and "second" are only used to distinguish similar objects, and cannot be understood as indicating or implying relative importance or implicitly indicating the number of indicated technical features.

The near field communication chip (also referred to as NFC IC) 21 may be used to provide a near field communication signal, that is, the NFC IC 21 is used to provide differential excitation current. The differential excitation current may include two current signals. Amplitudes of the two current signals are the same and phases are opposite, or it is understood that the two current signals are 180 degrees out of phase. In addition, the differential excitation current is balanced signals. It can be understood that analog signals are unbalanced signals if they are directly transmitted during transmission; if original analog signals are inverted, and then the inverted analog signals and the original analog signals are transmitted at the same time, the inverted analog signals and the original analog signals are called the balanced signals. The balanced signals pass through a differential amplifier during transmission, and the original analog signals are subtracted from the inverted analog signals to obtain enhanced original analog signals. Since two transmission lines are subject to the same interference in the transmission process, the same interference signal is subtracted in the subtraction process, and therefore the balanced signals have a better anti-interference performance.

The NFC IC 21 may include a first differential signal terminal 211 and a second differential signal terminal 212. For example, the first differential signal terminal 211 may be a positive (+) terminal of the NFC IC 21, and the second differential signal terminal 212 may be a negative (-) terminal of the NFC IC 21. The first differential signal terminal 211 and the second differential signal terminal 212 are used to provide the differential excitation current. For example, the differential excitation current provided by the NFC IC 21 may be output to the antenna device 200 via the first differential signal terminal 211 and returned to the NFC IC 21 via the second differential signal terminal 212, thereby forming an electrically conductive loop.

It can be understood that the NFC IC 21 may be disposed on the circuit board 30 of the electronic device 100; or a smaller independent circuit board may be disposed in the electronic device 100, and the NFC IC 21 may be integrated on the independent circuit board. The independent circuit board may be, for example, a small board in the electronic device 100.

The near field communication coil 22 is used to disposed around the camera module 60. The near field communication coil 22 is electrically connected to the NFC IC 21. The near field communication coil 22 is used to transmit the differential excitation current provided by the NFC IC 21 to form a first near field communication radiation field.

The first conductor structure 23 is electrically connected to the near field communication coil 22, and the first conductor structure 23 is grounded. The first conductor structure 23 is used to transmit the differential excitation current provided by the NFC IC 21 to form a second near field communication radiation field.

The first conductor structure 23 may be a metal structure in the electronic device 100, a metal wiring on the circuit board 30, a wound coil, or the like.

The second conductor structure 24 is electrically connected to the NFC IC 21, and the second conductor structure 24 is grounded. The second conductor structure 24 is used to transmit the differential excitation current provided by the NFC IC 21 to form a third near field communication radiation field.

The second conductor structure 24 may be a metal structure in the electronic device 100, a metal wiring on the circuit board 30, a wound coil, or the like.

In the embodiment of the present disclosure, the near field communication coil 22 is disposed around the camera module, the first conductor structure 23 is electrically connected to the NFC IC 21 through the near field communication coil 22, and the first near field communication radiation field formed by the near field communication coil 22 is used to enhance the second near field communication radiation field formed by the first conductor structure 23 and the third near field communication radiation field formed by the second conductor structure 24, thereby improving the performance of the NFC antenna.

It can be understood that the first near field communication radiation field, the second near field communication radiation field, and the third near field communication radiation field are at least partially overlapped, so that the first near field communication radiation field, the second near field communication radiation field, and the third near field communication radiation field may be mutually enhanced, thereby improving the performance of the NFC antenna.

Since the first near field communication radiation field, the second near field communication radiation field, and the third near field communication radiation field are at least partially overlapped, a direction of the differential excitation current in the near field communication coil 22 may be the same as that in the first conductor structure 23 or have a certain included angle. A direction of the differential excitation current in the near field communication coil 22 may be the same as that in the second conductor structure 24 or may have an included angle less than 90 degrees.

It can be understood that the first conductor structure 23 may also be directly electrically connected to the NFC IC 21, the near field communication coil 22 may also be located between the second conductor structure 24 and the NFC IC 21, and the second conductor structure 24 is electrically connected to the NFC IC 21 through the near field communication coil 22.

It can be understood that the first conductor structure 23, the second conductor structure 24, and the near field communication coil 22 may also be electrically connected to the NFC IC 21 respectively. When the first conductor structure 23, the second conductor structure 24, and the near field communication coil 22 are electrically connected to the NFC IC 21 respectively, the first conductor structure 23, the second conductor structure 24, and the near field communication coil 22 are grounded respectively.

The grounding plane 25 is used to form a common ground. The grounding plane 25 may be formed by one or more selected from a conductor, a printed circuit, a metal printed layer, and the like in the electronic device 100. For example, the grounding plane 25 may be disposed on the circuit board 30 of the electronic device 100. The grounding plane 25 may also be formed on the middle frame 20 of the electronic device 100, or may be formed through the metal rear cover 50.

The grounding plane 25 may include a first grounding point 251 and a second grounding point 252 spaced apart. The first grounding point 251 and the second grounding point 252 may be, for example, terminals of the grounding plane 25, convex structures on the grounding plane 25, or pads formed on the grounding plane 25.

The grounding plane 25A forms a conductive path between the first grounding point 251 and the second grounding point 252 on, and the conductive path may be used to conduct current. That is, when a voltage signal is applied to the first grounding point 251 and the second grounding point 252, a current may be generated between the first grounding point 251 and the second grounding point 252, thereby forming a current loop. It can be understood that when the NFC IC 21 provides the differential excitation current, the conductive path between the first grounding point 251 and the second grounding point 252 may be used to transmit the differential excitation current.

The first conductor structure 23 may include a first feeding terminal 231 and a first grounding terminal 232 spaced apart. The first feeding terminal 231 is electrically connected to a first terminal of the near field communication coil 22, and a second terminal of the near field communication coil 22 is electrically connected to the first differential signal terminal 211 of the NFC IC 21, thereby enabling the first differential signal terminal 211 to feed power to the near field communication coil 22 and the first feeding terminal 231 of the first conductor structure 23 individually. For example, the differential excitation current provided by the NFC IC 21 may be transmitted to the near field communication coil 22 and the first feeding terminal 231 of the first conductor structure 23 via the first differential signal terminal 211 to enable feeding the near field communication coil 22 and the first conductor structure 23. The first grounding terminal 232 is electrically connected to the first grounding point 251 of the grounding plane 25, thereby realizing the return of the first conductor structure 23 and the near field communication coil 22.

The second conductor structure 24 may include a second feeding terminal 241 and a second grounding terminal 242 spaced apart. The second feeding terminal 241 is electrically connected to the second differential signal terminal 212 of the NFC IC 21, so that the second differential signal terminal 212 feeds the second feeding terminal 241. For example, the differential excitation current provided by the NFC IC 21 may be transmitted to the second differential signal terminal 212 via the second feeding terminal 241 to realize feeding to the second conductor structure 24. The second grounding terminal 242 is electrically connected to the second grounding point 252 of the grounding plane 25, thereby realizing the return of the second conductor structure 24.

The near field communication coil 22, the first conductor structure 23, the conductive path on the grounding plane 25, and the second conductor structure 24 cooperatively form an electrically conductive loop for transmitting the differential excitation current. That is, the differential excitation current is output from one signal terminal of the NFC IC 21, for example from the first differential signal terminal 211, then fed into the near field communication coil 22, transmitted to the first conductor structure 23 through the near field communication coil 22, transmitted to the conductive path on the grounding plane 25 through the first conductor structure 23, transmitted to the second conductor structure 24 through the conductive path, and finally back to the second differential signal terminal 212 of the NFC IC 21 through the second conductor structure 24, thereby forming a complete electrically conductive loop.

It can be understood that when the electrically conductive loop transmits the differential excitation current, the near field communication coil 22, the first conductor structure 23, the conductive path on the grounding plane 25, and the second conductor structure 24 may cooperatively generate an alternating electromagnetic field, so as to radiate the NFC signal outward to realize the NFC communication of the electronic device 100.

As shown in FIG. 3, when the first differential signal terminal 211 of the NFC IC 21 is set as positive (+) and the second differential signal terminal 212 is set as negative (-), the current is transmitted from the first differential signal terminal 211 of the NFC IC 21 to the first terminal of the near field communication coil 22 when the electrically conductive loop transmits the differential excitation current, and then the differential excitation current is transmitted in a counterclockwise direction in the near field communication coil 22, transmitted from the second terminal of the near field communication coil 22 to the first conductor structure 23, transmitted from the first conductor structure 23 to the grounding plane 25, transmitted to the second conductor structure 24 through the conductive path on the grounding plane 25, and then transmitted from the second conductor structure 24 to the second differential signal terminal 212 of the NFC IC 21.

When the first differential signal terminal 211 of NFC IC 21 is set as negative (-) and the second differential signal terminal 212 is set as positive (+), the current is transmitted from the second differential signal terminal 212 of NFC IC 21 to the second conductor structure 24 when the electrically conductive loop transmits the differential excitation current, transmitted from the second conductor structure 24 to the grounding plane 25, transmitted to the first conductor structure 23 through the conductive path on the grounding plane 25, and then transmitted from the first conductor structure 23 to the first terminal of the near field communication coil 22. The differential excitation current is transmitted in a clockwise direction in the near field communication coil 22 and transmitted from the second terminal of the near field communication coil 22 to the first differential signal terminal 211 of the NFC IC 21.

The first conductor structure 23 and the second conductor structure 24 may be metal structures in the electronic device 100, metal wirings on the circuit board 30, wound coils, and the like.

For example, the circuit board 30 of the electronic device 100 is disposed with a printed circuit. The first conductor structure 23 may be the printed circuit, or the second conductor structure 24 may be the printed circuit.

For another example, the electronic device 100 may include a flexible printed circuit (FPC), and the FPC is electrically connected to the circuit board 30. The FPC may be, for example, an FPC of the display screen, an FPC of the camera, or the FPC of the motor; or the FPC may be an independent FPC for realizing the NFC conductor structure, which may be fixed in a housing of the electronic device 100. The FPC is disposed with a metal wiring, and the metal wring is used to transmit signals, such as the control signal of the display screen, the control signal of the camera, the control signal of the motor, etc. The first conductor structure 23 may include the metal wiring, or the second conductor structure 24 may include the metal wiring.

For still another example, the metal rear cover 50 is disposed with a first metal branch and a second metal branch spaced apart, the first metal branch forms a first conductor structure 23, and the second metal branch forms a second conductor structure 24.

As shown in FIG. 3 and FIG. 4, FIG. 4 illustrates a schematic structural diagram of a first type structure of the rear cover in the electronic device according to the embodiment of the present disclosure. When the first metal branch and the second metal branch are located on two opposite sides of the rear cover 50, the two sides are a left side and a right side respectively. The rear cover 50 is disposed with a first slot 51 and a second slot 52 spaced apart. The first slot 51 and the second slot 52 penetrate through the rear cover 50. The first slot 51 extends in a first direction on the rear cover 50 to form the first metal branch, and the second slot 52 extends in a second direction on the rear cover 50. The first direction and the second direction may be the same or different.

Specifically, the rear cover 50 is further disposed with a first slit 53 and a second slit 54, the first slit 53 and the second slit 54 penetrate through the rear cover 50, the first slit 53 and the first slot 51 are intercommunicated to form the first metal branch, and the second slit 54 and the second slot 52 are intercommunicated to form a second metal branch.

The rear cover 50 is further formed with an opening 55 for installing the camera module 60. The opening 55 may be formed at a position near an edge of the rear cover 50, and the opening 55 may also be disposed at a middle position of the rear cover 50. The setting position of the opening 55 may be set according to actual needs. The embodiment of the present disclosure will not be repeated one by one.

A shape of the opening 55 is circular or elliptical. It can be understood that the shape of the opening 55 may also be square or irregular. The specific shape of the opening 55 may be set according to a shape and a size of the camera module 60. The embodiment of the present disclosure does not further form the specific shape of the opening 55.

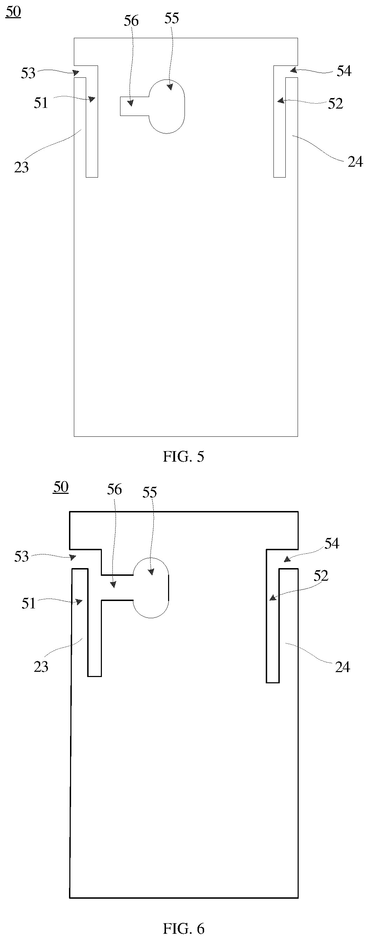

FIG. 5 illustrates a schematic structural diagram of a second type structure of the rear cover in the electronic device according to the embodiment of the present disclosure. The rear cover 50 may further be formed with a through hole 56, and the through hole is located between the first slot 51 and the opening 55, and the through hole 56 is intercommunicated to the opening 55, so that the differential excitation current signal transmitted by the near field communication coil 22 can be transmitted to the outside of the electronic device through the opening 55 and the through hole 56, and in this case more differential excitation current signals can be transmitted to the outside of the electronic device, thereby improving the performance of the NFC antenna.

FIG. 6 illustrates a schematic structural diagram of a third type structure of the rear cover in the electronic device according to the embodiment of the present disclosure. It can be understood that, in order to further improve the performance of the NFC antenna, the through hole 56 may be intercommunicated to the opening 55 and the first slot 51 to realize that the differential excitation current signal transmitted by the near field communication coil 22 is transmitted to the outside of the electronic device through the opening 55, the through hole 56 and the first slot 51, so that more differential excitation current signals can be transmitted to the outside of the electronic device, thereby further improving the performance of the NFC antenna.

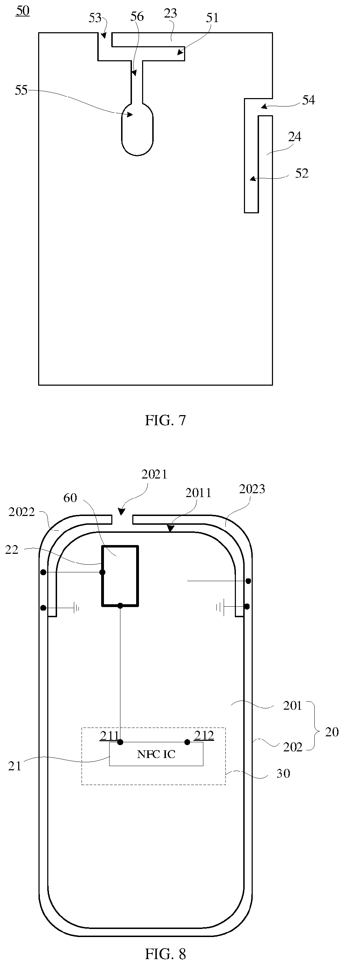

FIG. 7 illustrates a schematic structural diagram of a fourth type structure of the rear cover in the electronic device according to the embodiment of the present disclosure. It can be understood that the first metal branch may also be located at an upper end or a lower end of the rear cover 50. For example, when the first metal branch is located at the upper end of the rear cover 50 and the second metal branch is located at the right side of the rear cover 50, the through hole 56 on the rear cover 50 is located at the upper end of the rear cover 50, and the through hole 56 is located between the first slot 51 and the opening 55. The setting position of the through hole 56 may be adapted to the position of the first metal branch. It is understandable that the setting position of the through hole 56 may also be adapted to the position of the second metal branch.

As shown in the FIG.3 and FIG. 4, in order to further improve the performance of the NFC antenna, when the first conductor structure 23 and the second conductor structure 24 are located on the metal rear cover 50, the first grounding terminal 232 of the first conductor structure 23 and the second grounding terminal 242 of the second conductor structure 24 are disposed away from the near field communication coil 22. For example, the first grounding terminal 232 is located at an end of the first metal branch away from the first slit 53, the second grounding terminal 242 is located at an end of the second metal branch away from the second slit 54. Since the grounding terminals of the first conductor structure 23 and the second conductor structure 24 are not disposed close to the near field communication coil 22, the differential excitation current transmitted by the NFC antenna can form a forward eddy current, thereby improving the performance of the NFC antenna.

For another example, the middle frame 20 is disposed with a first metal branch and a second metal branch spaced apart, the first metal branch forms the first conductor structure 23, and the second metal branch forms the second conductor structure 24.

FIG. 8 illustrates a schematic structural diagram of the middle frame of the electronic device according to the embodiment of the present disclosure. The middle frame 20 may include a substrate 201 and a metal bezel 202. The substrate 201 may have a thin plate-like or a sheet-like structure. In some embodiments, the substrate 201 may be formed with structures such as holes or grooves. The holes or the grooves formed in the substrate 201 may be used to mount other electronic components of the electronic device 100. For example, electronic components such as the camera and the circuit board of the electronic device 100 may be mounted on the substrate 201 through the holes or the grooves. A material of the substrate 201 may include metal or plastic. For example, the substrate 201 may be an aluminum alloy substrate.

The metal bezel 202 is formed on a periphery of the substrate 201. For example, the metal bezel 202 may be made of a metal material and formed around the periphery of the substrate 201. The material of the metal frame 202 may include a metal such as an aluminum alloy or a magnesium alloy. For example, in some embodiments, the metal bezel 202 may be a magnesium alloy metal bezel. The width of the metal frame 202 may be between 2 millimeters (mm) and 5 mm.

The metal bezel 202 is disposed with a slit, such as a third slit 2021, and the third slit penetrates through a thickness direction of the metal bezel 202 to divide the metal bezel 202 into at least a first metal part 2022 and a second metal part 2023. The first metal part 2022 forms a first metal branch, and the second metal part 2023 forms a second metal branch.

There is a slot 2011 formed between the metal bezel 202 and the substrate 201. The slot 2011 is communicated with the third slit 2021. The third slit 2021 divides the slot 2011 into a first part and a second part. For example, the slot 2011 extends from the third slit 2021 to the left along the metal bezel 202 to form the first part, and the slot 2011 extends from the third slit 2021 to the right along the metal bezel 202 to form the second part. The metal bezel 202 corresponding to the first part is the first metal part 2022, and the metal frame corresponding to the second part is the second metal part 2023.

It can be understood that in order to improve the structural strength of the electronic device, plastic materials may be filled in the third slit 2021 and the slot 2011, and the plastic materials can seal the third slit 2021 and the slot 2011.

It can be understood that in order to improve the appearance aesthetics of the electronic device, plastic materials with the same color as the metal bezel 202 may be filled in the third slit 2021 and the slot 2011 to reduce types of appearance colors of the electronic device 100, which helps to improve the appearance aesthetics of the electronic device.

It can be understood that the middle frame 20 may also include a substrate and a plastic bezel, the plastic bezel is disposed around the substrate, and two metal sheets are disposed on the plastic bezel to form a first metal branch and a second metal branch.

It can be understood that when the first metal branch is disposed on the middle frame 20 to form the first conductor structure 23 and the second metal branch is disposed to form the second conductor structure 24, the rear cover 50 may also be formed with a through hole, such as a through hole 56, and the through hole 56 is communicated with the opening 55 and the slot 2011, so as to realize that the differential excitation current signal transmitted by the near field communication coil 22 is transmitted to the outside of the electronic device through the opening 55, the through hole 56 and the slot 2011, so that more differential excitation current signals can be transmitted to the outside of the electronic device to further improve the performance of the NFC antenna.

The camera module 60 may include a camera and a metal decorative component. The camera is used to collect ambient light signals for imaging, so as to take photos or record video. The camera may include a lens and a base. The lens is mounted on the base to fix the lens. The base may be mounted on the middle frame 20 or on the circuit board 30 for fixing.

The metal decorative component is formed with a mounting hole around the camera, and the camera is located in the mounting hole. On the one hand, the metal decorative component can play a decorative role to prevent the internal structure of the camera from being observed from the outside of the electronic device; on the other hand, it can also play an auxiliary role in fixing the camera and enhance the structural stability of the camera.

The near field communication coil 22 may be disposed on the periphery of the camera, and the near field communication coil 22 may also be arranged around the periphery of the metal decorative component.

When the near field communication coil 22 is disposed on the periphery of the camera, the camera may include a lens and a base, and the lens is fixed on the base. The near field communication coil 22 may be arranged around the base, or around an end of the lens close to the base.

When the near field communication coil 22 is disposed on the periphery of the metal decorative component, the near field communication coil 22 is an unclosed coil to form two ends for electrical connection with the NFC IC 21 and the first conductor structure 23.

Among them, a material of the metal decorative component may include, for example, aluminum alloy, magnesium alloy, copper alloy and other materials.

The metal decorative component is disposed with a third slot, and the third slot is located between the through hole 56 and the opening 55. The third slot penetrates through the metal decorative component to divide the metal decorative component into two parts. In addition, the third slot is communicated with the mounting hole. When the near field communication coil 22 transmits the differential excitation current, a transmission direction of an induced current generated in the metal decorative component can be changed, so that the direction of the differential excitation current transmitted by the near field communication coil 22 is perpendicular to the direction of the induced current generated in the metal decorative component to form orthogonal polarization, so as to reduce the interference of the induced magnetic field formed in the metal decorative component to the near field communication signal, to further improve the performance of the NFC antenna.

It can be understood that the camera module 60 may also include multiple cameras. When the camera module 60 includes multiple cameras, the near field communication coil 22 may be disposed around the periphery of at least one camera. For example, the near field communication coil 22 may be disposed around the periphery of one camera, and the near field communication coil 22 may also be disposed around the periphery of two cameras.

It can be understood that when the camera module 60 includes multiple cameras, the near field communication coil 22 may also be disposed on the periphery of the metal decorative component.

Among them, the number of cameras may be two, three or four, and the number of cameras can be flexibly set according to actual needs.

The following describes in detail the camera module 60 including two cameras as an example.

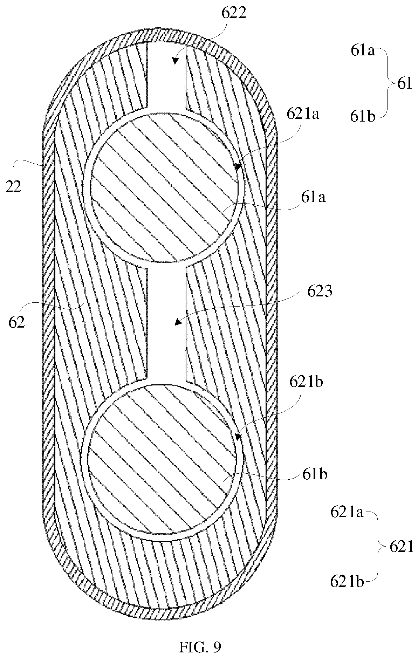

As shown in FIG. 6 and FIG. 9, FIG. 9 illustrates a schematic structural diagram of a first type connection between the camera module and the near field communication coil according to the embodiment of the present disclosure. The camera module 60 may include two cameras 61 and a metal decorative component 62, and the metal decorative component is arranged around each camera 61. Two cameras such as a first camera 61a and a second camera 61b.

The metal decorative component 62 is formed with two mounting holes 621, such as a first mounting hole 621a and a second mounting hole 621b, the first mounting hole is used for mounting the first camera 61a, and the second mounting hole 621b is used for mounting the second camera 61b.

The metal decorative component 62 is further disposed with a fourth slot 622 and a fifth slot 623, the fourth slot 622 is adjacent to the first mounting hole 621a, the fourth slot 622 penetrates through the metal decorative component 62 to divide the metal decorative component 62 into two parts, the fifth slot 623 is located between the first mounting hole 621a and the second mounting hole 621b, and the fourth slot 622, the fifth slot 623, the first mounting hole 621a, and the second mounting hole 621b are intercommunicated. Therefore, the fourth slot 622, the first mounting hole 621a, the second mounting hole 621b, and the fifth slot 623 may be integrally formed.

When the near field communication coil 22 is arranged around the metal decorative component 62, since the fourth slot 622 and the fifth slot 623 are disposed in the metal decorative component 62, when the near field communication coil 22 transmits the differential excitation current, the transmission direction of the induced current generated in the metal decorative component 62 may be changed. Therefore, the direction of the differential excitation current transmitted by the near field communication coil 22 is perpendicular to the direction of the induced current generated in the metal decorative component 62 to form orthogonal polarization, so as to reduce the interference of the induced magnetic field generated in the metal decorative part 62 on the NFC signal, thereby further improving the performance of the NFC antenna.

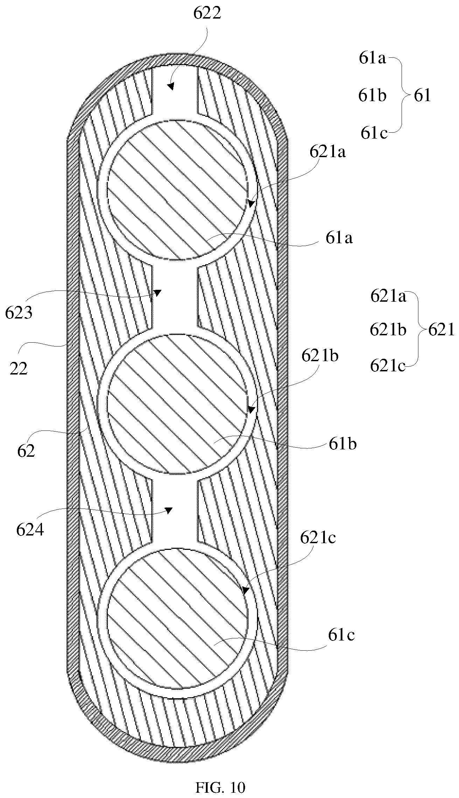

As shown in FIG. 7 and FIG. 10, FIG. 10 illustrates a schematic structural diagram of a second type connection between the camera module and the near field communication coil according to the embodiment of the present disclosure. It can be understood that the camera module 60 may also include three cameras 61 and a metal decorative component 62, three cameras 61 such as a first camera 61a, a second camera 61a, and a third camera 61c. The metal decorative component 62 is disposed with three mounting holes 621, three mounting holes 621 such as a first mounting hole 621a, a second mounting hole 621b, and a third mounting hole 621c. The first mounting hole 621a is used to mount the first camera 61a, and the second mounting hole 621b is used to mount the second camera 61b, and the third mounting hole 621c is used to mount the third camera 61c.

The metal decorative component 62may also be disposed with three slots, such as a fourth slot 622, a fifth slot 623 and a sixth slot 624. The fourth slot 622 is adjacent to the first mounting hole 621a, and the fourth slot 622 penetrates through the metal decorative component 62 to divide the metal decorative component 62 into two parts. The fifth slot 623 is located between the first mounting hole 621a and the second mounting hole 621b, the sixth slot 624 is located between the second mounting hole 621b and the third mounting hole 621c, and the fourth slot 622, the fifth slot 623, the sixth slot 624, the first mounting hole 621a, the second mounting hole 621b, and the third mounting hole 621c are intercommunicated. Therefore, the third mounting hole 621c, the sixth slot 624, the second mounting hole 621b, the fifth slot 623, the first mounting hole 621a, and the fourth slot 622 may be integrally formed.

When the near field communication coil 22 is arranged around the metal decorative component 62, since the fourth slot 622, the fifth slot 623 and the sixth slot 624 are disposed in the metal decorative component 62, when the near field communication coil 22 transmits the differential excitation current, the transmission direction of the induced current generated in the metal decorative component 62 may be changed. Therefore, the direction of the differential excitation current transmitted by the near field communication coil 22 is perpendicular to the direction of the induced current generated in the metal decorative component 62 to form orthogonal polarization, so as to reduce the interference of the induced magnetic field formed in the metal decorative component 62 to the near field communication signal, thereby further improving the performance of the NFC antenna.

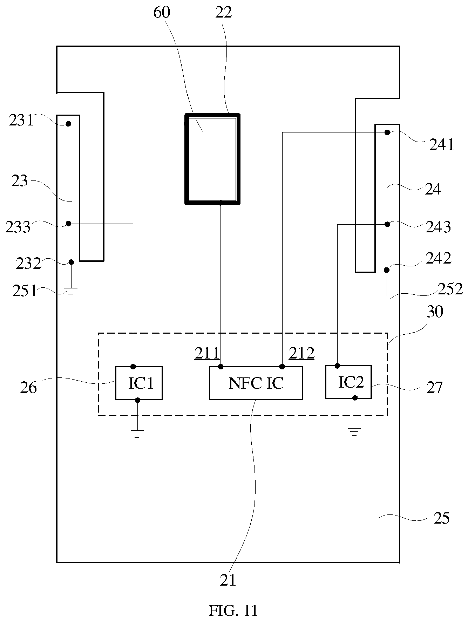

FIG. 11 illustrates a schematic structural diagram of a second type connection between the antenna device and the camera module in the electronic device according to the embodiment of the present disclosure. The antenna device 200 may further include a first non-near field communication chip 26 and a second non-near field communication chip 27. The first non-near field communication chip 26 is, for example, IC1, and the second non-near field communication chip 27 is, for example, IC2. It is understandable that the first non-near field communication chip 26 and the second non-near field communication chip 27 may be integrated on the circuit board 30 of the electronic device 100.

The first non-near field communication chip 26 is used to provide a first non-near field communication excitation signal. The first non-near field communication excitation signal is an unbalanced signal. The first non-near field communication excitation signal may include one of a cellular network signal, a wireless fidelity (Wi-Fi) signal, a global positioning system (GPS) signal, and a Bluetooth (BT) signal. Accordingly, the first non-near field communication chip 26 may be a cellular communication chip for providing a cellular network signal; the first non-near field communication chip 26 may be a Wi-Fi chip for providing a Wi-Fi signal; the first non-near field communication chip 26 may be a GPS chip for providing a GPS signal; and the first non-near field communication chip 26 may also be a BT chip for providing a BT signal.

The first conductor structure 23 may further include a third feeding terminal 233. The third feeding terminal 233 is spaced from the first feeding terminal 231 and the first grounding terminal 232. The third feeding terminal 233 is electrically connected to the first non-near field communication chip 26, and the first non-near field communication chip 26 is grounded. Thus, the first non-near field communication chip 26 may feed the first non-near field communication excitation signal to the first conductor structure 23 through the third feeding terminal 223. Therefore, the first conductor structure 23 may further be used to transmit the first non-near field communication excitation signal.

It can be understood that the first conductor structure 23 may be used to transmit both the differential excitation current signal provided by the NFC IC 21 and the first non-near field communication excitation signal provided by the first non-near field communication chip 26, so that the multiplexing of the first conductor structure 23 may be realized, and the number of conductor structures used to transmit wireless signals in the electronic device 100 can be reduced, thereby saving the internal space of the electronic device 100.

Among them, it should be noted that the frequency of NFC signal is usually 13.56 megahertzes (MHz), the frequency of cellular network signal is usually above 700 MHz, the frequency of Wi-Fi signal is usually 2.4 gigahertz (GHz) or 5 GHz, the frequency of GPS signal usually includes multiple frequency bands such as 1.575 GHz, 1.227 GHz, 1.381 GHz and 1.841 GHz, and the frequency of BT signal is usually 2.4 GHz. Therefore, compared with the cellular network signal, the Wi-Fi signal, the GPS signal and the BT signal, the NFC signal is a low-frequency signal, while the cellular network signal, the Wi-Fi signal, the GPS signal, and the BT signal are high-frequency signals. Alternatively, it can be understood that the NFC signal is the low-frequency signal, the first non-near field communication excitation signal is a high-frequency signal, and the frequency of the NFC signal is less than that of the first non-near field communication excitation signal.

In addition, it should be noted that when transmitting a wireless signal, the lower the frequency of the wireless signal is, the longer the length of the radiator is required, and the higher the frequency of the wireless signal is, the shorter the length of the radiator is required. That is, the length of the radiator required to transmit the NFC signal is greater than the length of the radiator required to transmit the first non-near field communication stimulus signal.

Therefore, in the first conductor structure 23, a distance between the first feeding terminal 231 and the first grounding terminal 232 is greater than a distance between the third feeding terminal 233 and the first grounding terminal 232. Thus, in the first conductor structure 23, the length of the radiator transmitting the NFC signal is greater than the length of the radiator transmitting the first non-near field communication excitation signal.

In addition, in order to reduce the overall length of the first conductor structure 23, the third feeding terminal 233 and the first feeding terminal 231 may be disposed on the same side of the first grounding terminal 232. That is, the third feeding terminal 233 is located between the first feeding terminal 231 and the first grounding terminal 232. Compared with the third feeding terminal 233 and the first feeding terminal 231 located on different sides of the first grounding terminal 232, the third feeding terminal 233 and the first feeding terminal 231 located on the same side of the first grounding terminal 232 can reuse the part between the third feeding terminal 233 and the first grounding terminal 232, thereby reducing the overall length of the first conductor structure 23.

The second non-near field communication chip 27 is used to provide a second non-near field communication excitation signal. The second non-near field communication excitation signal is an unbalanced signal. The second non-near field communication excitation signal may include one of a cellular network signal, a wireless fidelity signal (Wi-Fi signal), a global positioning system signal (GPS signal) and a Bluetooth signal (BT signal). Accordingly, the second non-near field communication chip 27 may be a cellular communication chip for providing the cellular network signal; the second non-near field communication chip 27 may be a Wi-Fi chip for providing the Wi-Fi signal; the second non-near field communication chip 27 may be a GPS chip for providing the GPS signal; and the second non-near field communication chip 27 may also be a BT chip for providing the BT signal.

It should be noted that the second non-near field communication excitation signal and the first non-near field communication excitation signal may be signals of the same communication type or signals of different communication types. Accordingly, the second non-near field communication chip 27 and the first non-near field communication chip 26 may be chips of the same type or different types.

The second conductor structure 24 may further include a fourth feeding terminal 243. The fourth feeding terminal 243 is spaced from the second feeding terminal 241 and the second grounding terminal 242. The fourth feeding terminal 233 is electrically connected to the second non-near field communication chip 27, and the second non-near field communication chip 27 is grounded. Thus, the second non-near field communication chip 27 may feed the second non-near field communication signal to the second conductor structure 24 through the fourth feeding terminal 243. Therefore, the second conductor structure 24 may also be used to transmit the second non-near field communication excitation signal.

It can be understood that the second conductor structure 24 may be used to transmit both the differential excitation current signal provided by the NFC IC 21 and the second non-near field communication excitation signal provided by the second non-near field communication chip 27, so that the multiplexing of the second conductor structure 24 can be realized, and the number of conductor structures used to transmit wireless signals in the electronic device 100 can be further reduced, thereby further saving the internal space of the electronic device 100.

Similarly, in the second conductor structure 24, a distance between the second feeding terminal 241 and the second grounding terminal 242 is greater thana distance between the fourth feeding terminal 243 and the second grounding terminal 242. Thus, in the second conductor structure 24, the length of the radiator transmitting the NFC signal is greater than the length of the radiator transmitting the second non-near field communication excitation signal.

In addition, in order to reduce the overall length of the second conductor structure 24, the fourth feeding terminal 243 and the second feeding terminal 241 may be disposed on the same side of the second grounding terminal 242. That is, the fourth feeding terminal 243 is located between the second feeding terminal 241 and the second grounding terminal 242. Compared with the fourth feeding terminal 243 and the second feeding terminal 241 located on different sides of the second grounding terminal 242, the fourth feeding terminal 243 and the second feeding terminal 241 located on the same side of the second grounding terminal 242 can reuse the part between the fourth feeding terminal 243 and the second grounding terminal 242, thereby reducing the overall length of the second conductor structure 24.

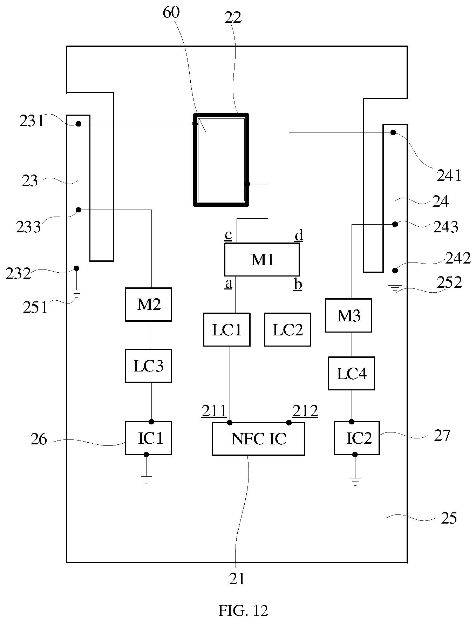

FIG. 12 illustrates a schematic structural diagram of a third type connection between the antenna device and the camera module in the electronic device according to the embodiment of the present disclosure. The antenna device 200 may further include a first matching circuit M1, a second matching circuit M2, a third matching circuit M3, a first filter circuit LC1, a second filter circuit LC2, a third filter circuit LC3, and a fourth filter circuit LC4. It is understandable that the matching circuit may also be referred to as a matching network, a tuning circuit, a tuning network, etc. The filter circuit may also be referred to as a filter network.

The first matching circuit M1 is electrically connected to the first differential signal terminal 211 of the NFC IC 21, the second differential signal terminal 212 of the NFC IC 21, the first feeding terminal 231 of the first conductor structure 23, and the second feeding terminal 241 of the second conductor structure 24, individually. The first matching circuit M1 is used for matching impedance of the electrically conductive loop when transmitting the differential excitation current. Among them, the electrically conductive loop is an electrically conductive loop formed by the near field communication coil 22, the first conductor structure 23, the conductive path on the grounding plane 25, and the second conductor structure 24.

The first matching circuit M1 may include a first input terminal a, a second input terminal b, a first output terminal c and a second output terminal d. The first input terminal a is electrically connected to the first differential signal terminal 211 of the NFC IC 21, the second input terminal b is electrically connected to the second differential signal terminal 212 of the NFC IC 21, the first output terminal c is electrically connected to the first feeding terminal 231 of the first conductor structure 23, and the second output terminal d is electrically connected to the second feeding terminal 241 of the second conductor structure 24.

The first filter circuit LC1 is disposed between the first differential signal terminal 211 of the NFC IC 21 and the first input terminal a of the first matching circuit M1. The first filter circuit LC1 is used to filter a first interference signal between the first differential signal terminal 211 and the first input terminal a. The first interference signal is an electrical signal other than the differential excitation current provided by the NFC IC 21.

The second filter circuit LC2 is disposed between the second differential signal terminal 212 of the NFC IC 21 and the second input terminal b of the first matching circuit M1. The second filter circuit LC2 is used to filter a second interference signal between the second differential signal terminal 212 and the second input terminal B. The second interference signal is an electrical signal other than the differential excitation current provided by the NFC IC 21.

The second matching circuit M2 is electrically connected to the first non-near field communication chip 26 and the third feeding terminal 233 of the first conductor structure 23 individually. The second matching circuit M2 is used to match impedance of the first conductor structure 23 when transmitting the first non-near field communication excitation signal.

The third filter circuit LC3 is disposed between the first non-near field communication chip 26 and the second matching circuit M2. The third filter circuit LC3 is used to filter a third interference signal between the first non-near field communication chip 26 and the second matching circuit M2. The third interference signal is an electrical signal other than the first non-near field communication excitation signal provided by the first non-near field communication chip 26.

The third matching circuit M3 is electrically connected to the second non-near field communication chip 27 and the fourth feeding terminal 243 of the second conductor structure 24 individually. The third matching circuit M3 is used to match impedance of the second conductor structure 24 when transmitting the second non-near field communication excitation signal.

The fourth filter circuit LC4 is disposed between the second non-near field communication chip 27 and the third matching circuit M3. The fourth filter circuit LC4 is used to filter a fourth interference signal between the second non-near field communication chip 27 and the third matching circuit M33. The fourth interference signal is an electrical signal other than the second non-near field communication excitation signal provided by the second non-near field communication chip 27.

It can be understood that the first matching circuit M1, the second matching circuit M2, and the third matching circuit M3 may all include a circuit composed of any series or any parallel of capacitors and inductors. The first filter circuit LC1, the second filter circuit LC2, the third filter circuit LC3, and the fourth filter circuit LC4 may also include a circuit composed of any series or any parallel of capacitors and inductors.

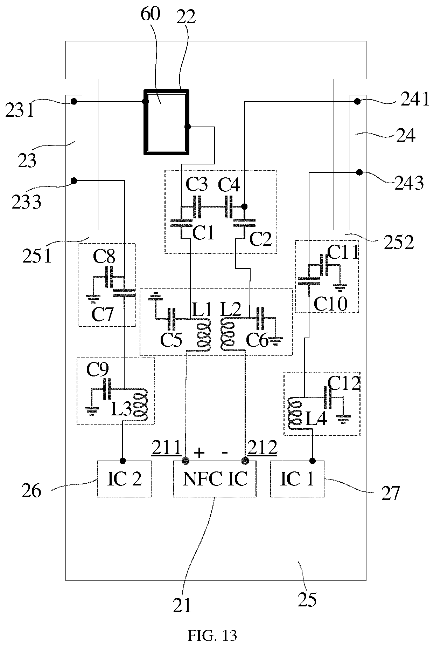

FIG. 13 illustrates a schematic structural diagram of a fourth type connection between the antenna device and the camera module in the electronic device according to the embodiment of the present disclosure.

The first matching circuit M1 may include, for example, four capacitors C1, C2, C3, and C4. The capacitor C1 is connected in series with the first differential signal terminal 211 of the NFC IC 21, and the capacitor C2 is connected in series with the second differential signal terminal 212 of the NFC IC 21. The capacitor C3 is connected in series with the capacitor C4, and then connected in parallel with the NFC IC 21, and the capacitor C3 and the capacitor C4 are grounded. It is understandable that capacitance values of capacitors C1, C2, C3 and C4 may be set according to actual needs.

The first filter circuit LC1 may include, for example, an inductor L1 and a capacitor C5. The inductor L1 is connected in series between the first differential signal terminal 211 and the first matching circuit M1, and the capacitor C5 is connected in parallel with the NFC IC 21 and grounded. It is understandable that an inductance value of inductor L1 and a capacitance value of capacitor C5 may be set according to actual needs.

The second filter circuit LC2 may include, for example, an inductor L2 and a capacitor C6. The inductor L2 is connected in series between the second differential signal terminal 212 and the first matching circuit M1, and the capacitor C6 is connected in parallel with the NFC IC 21 and grounded. It is understandable that an inductance value of inductor L2 and a capacitance value of capacitor C6 may be set according to actual needs.

The second matching circuit M2 may include, for example, capacitors C7 and C8. The capacitor C7 is connected in series between the third feeding terminal 233 of the first conductor structure 23 and the first non-near field communication chip 26, and the capacitor C8 is connected in parallel with the first non-near field communication chip 26 and grounded. It is understandable that capacitance values of capacitors C7 and C8 may be set according to actual needs.

The third filter circuit LC3 may include, for example, an inductor L3 and a capacitor C9. The inductor L3 is connected in series between the first non-near field communication chip 26 and the second matching circuit M2, and the capacitor C9 is connected in parallel with the first non-near field communication chip 26 and grounded. It is understandable that an inductance value of inductor L3 and a capacitance value of capacitor C9 may be set according to actual needs.

The third matching circuit M3 may include, for example, capacitors C10 and C11. The capacitor C10 is connected in series between the fourth feeding terminal 243 of the second conductor structure 24 and the second non-near field communication chip 27, and the capacitor C11 is connected in parallel with the second non-near field communication chip 27 and grounded. It is understandable that capacitance values of the capacitors C10 and C11 may be set according to actual needs.

The fourth filter circuit LC4 may include, for example, an inductor L4 and a capacitor C12. The inductor L4 is connected in series between the second non-near field communication chip 27 and the third matching circuit M3, and the capacitor C12 is connected in parallel with the second non-near field communication chip 27 and grounded. It is understandable that an inductance value of the inductor L4 and a capacitance value of the capacitor C12 may be set according to actual needs.

The antenna device and the electronic device according to the embodiment of the present disclosure are described in detail above. In this paper, the principles and implementations of the present disclosure are described herein with specific embodiments, and the description of the above embodiments is only used to help understand the present disclosure. Meanwhile, for those skilled in the art, according to the idea of the present disclosure, there may be changes in the specific embodiments and scope of application. In conclusion, the contents of the description should not be understood as limitation to the present disclosure.

## Claims

1. An antenna device, comprising:
a near field communication chip, configured to provide differential excitation current;
a near field communication coil, disposed on a periphery of a camera module and electrically connected to the near field communication chip;
a first conductor structure, electrically connected to the near field communication coil, wherein the first conductor structure is grounded; and
a second conductor structure, electrically connected to the near field communication chip, wherein the second conductor structure is grounded;
wherein the near field communication coil, the first conductor structure and the second conductor structure are configured to cooperatively transmit the differential excitation current; and when transmitting the differential excitation current, the near field communication coil is configured to form a first near field communication radiation field, the first conductor structure is configured to form a second near field communication radiation field, and the second conductor structure is configured to form a third near field communication radiation field, the first near field communication radiation field being configured to enhance the second near field communication radiation field and the third near field communication radiation field.

2. The antenna device according to claim 1, wherein the first near field communication radiation field, the second near field communication radiation field, and the third near field communication radiation field are at least partially overlapped.

3. The antenna device according to claim 1, further comprising: a grounding plane;
wherein the near field communication chip comprises a first differential signal terminal and a second differential signal terminal, and the first differential signal terminal and the second differential signal terminal are configured to provide the differential excitation current;
wherein the grounding plane comprises a first grounding point and a second grounding point spaced apart, and the grounding plane forms a conductive path between the first grounding point and the second grounding point;
wherein the first conductor structure comprises a first feeding terminal and a first grounding terminal spaced apart, the first feeding terminal is electrically connected to the first differential signal terminal through the near field communication coil, and the first grounding terminal is electrically connected to the first grounding point;
wherein the second conductor structure comprises a second feeding terminal and a second grounding terminal spaced apart, the second feeding terminal is electrically connected to the second differential signal terminal, and the second grounding terminal is electrically connected to the second grounding point; and
wherein the near field communication coil, the first conductor structure, the conductive path, and the second conductor structure cooperatively form a conductive loop configured to transmit the differential excitation current.

4. The antenna device according to claim 3, wherein the differential excitation current in the near field communication coil is transmitted in a counterclockwise direction when the first differential signal terminal of the near field communication chip is a positive terminal; or the differential excitation current in the near field communication coil is transmitted in a clockwise direction when the first differential signal terminal of the near field communication chip is a negative terminal.

5. The antenna device according to claim 3, further comprising:
a first non-near field communication chip, configured to provide a first non-near field communication excitation signal;
wherein the first conductor structure further comprises a third feeding terminal, the third feeding terminal is electrically connected to the first non-near field communication chip, and the first conductor structure is further configured to transmit the first non-near field communication excitation signal.

6. The antenna device according to claim 3, further comprising:
a second non-near field communication chip, configured to provide a second non-near field communication excitation signal;
wherein the second conductor structure further comprises a fourth feeding terminal, the fourth feeding terminal is electrically connected to the second non-near field communication chip, and the second conductor structure is further configured to transmit the second non-near field communication excitation signal.

7. The antenna device according to claim 3, further comprising:
a first matching circuit, electrically connected to the first differential signal terminal, the second differential signal terminal, the first feeding terminal, and the second feeding terminal individually, wherein the first matching circuit is configured to match impedance of the electrically conductive loop when transmitting the differential excitation current.

8. The antenna device according to claim 5, further comprising:
a second matching circuit, electrically connected to the first non-near field communication chip and the third feeding terminal individually, wherein the second matching circuit is configured to match impedance of the first conductor structure when transmitting the first non-near field communication excitation signal.

9. The antenna device according to claim 6, further comprising:
a third matching circuit, electrically connected to the second non-near field communication chip and the fourth feeding terminal individually, wherein the third matching circuit is configured to match impedance of the second conductor structure when transmitting the second non-near field communication excitation signal.

10. An electronic device, comprising:
an antenna device, comprising:
a near field communication chip, configured to provide differential excitation current;
a near field communication coil, disposed on a periphery of a camera module and electrically connected to the near field communication chip;
a first conductor structure, electrically connected to the near field communication coil, wherein the first conductor structure is grounded;
a second conductor structure, electrically connected to the near field communication chip, wherein the second conductor structure is grounded;
wherein the near field communication coil, the first conductor structure, and the second conductor structure are configured to cooperatively transmit the differential excitation current; and when transmitting the differential excitation current, the near field communication coil is configured to form a first near field communication radiation field, the first conductor structure is configured to form a second near field communication radiation field, and the second conductor structure is configured to form a third near field communication radiation field, the first near field communication radiation field being configured to enhance the second near field communication radiation field and the third near field communication radiation field.

11. The electronic device according to claim 10, wherein the first near field communication radiation field, the second near field communication radiation field, and the third near field communication radiation field are at least partially overlapped.

12. The electronic device according to claim 10, wherein the antenna device further comprises a grounding plane;
wherein the near field communication chip comprises a first differential signal terminal and a second differential signal terminal, and the first differential signal terminal and the second differential signal terminal are configured to provide the differential excitation current;
wherein the grounding plane comprises a first grounding point and a second grounding point spaced apart, and the grounding plane forms a conductive path between the first grounding point and the second grounding point;
wherein the first conductor structure comprises a first feeding terminal and a first grounding terminal spaced apart, the first feeding terminal is electrically connected to the first differential signal terminal through the near field communication coil, and the first grounding terminal is electrically connected to the first grounding point;
wherein the second conductor structure comprises a second feeding terminal and a second grounding terminal spaced apart, the second feeding terminal is electrically connected to the second differential signal terminal, and the second grounding terminal is electrically connected to the second grounding point; and
wherein the near field communication coil, the first conductor structure, the conductive path, and the second conductor structure cooperatively form a conductive loop configured to transmit the differential excitation current.

13. The electronic device according to claim 12, wherein the differential excitation current in the near field communication coil is transmitted in a counterclockwise direction when the first differential signal terminal of the near field communication chip is a positive terminal; or the differential excitation current in the near field communication coil is transmitted in a clockwise direction when the first differential signal terminal of the near field communication chip is a negative terminal.

14. The electronic device according to claim 12, wherein the antenna device further comprises:
a first non-near field communication chip, configured to provide a first non-near field communication excitation signal;
wherein the first conductor structure further comprises a third feeding terminal, the third feeding terminal is electrically connected to the first non-near field communication chip, and the first conductor structure is further configured to transmit the first non-near field communication excitation signal.

15. The electronic device according to claim 12, wherein the antenna device further comprises:
a second non-near field communication chip, configured to provide a second non-near field communication excitation signal;
wherein the second conductor structure further comprises a fourth feeding terminal, the fourth feeding terminal is electrically connected to the second non-near field communication chip, and the second conductor structure is further configured to transmit the second non-near field communication excitation signal.

16. The electronic device according to claim 10, further comprising:
a metal rear cover, formed with an opening; and
the camera module, disposed in the opening, wherein the near field communication coil is arranged around the camera module.

17. The electronic device according to claim 16, further comprising:
a middle frame, connected to the metal rear cover and disposed with a first metal branch and a second metal branch, wherein the first metal branch forms the first conductor structure, and the second metal branch forms the second conductor structure.

18. The electronic device according to claim 16, wherein the metal rear cover is disposed with a first metal branch and a second metal branch, the first metal branch forms the first conductor structure, and the second metal branch forms the second conductor structure.

19. The electronic device according to claim 18, wherein the metal rear cover is disposed with a first slot and a second slot spaced apart to thereby form the first metal branch and the second metal branch on the metal rear cover.

20. The electronic device according to claim 19, wherein the metal rear cover is formed with a through hole, the through hole is disposed between the opening and the first slot and communicated with both the opening and the first slot to thereby make the near field communication coil transmit the differential excitation current to an outside of the electronic device through the opening, the through hole and the first slot in a sequential order.

21. The electronic device according to claim 16, wherein the camera module comprises a plurality of cameras, and the near field communication coil is arranged around at least one of the plurality of cameras.

22. The electronic device according to claim 16, wherein the camera module comprises at least one camera and a metal decorative component, the metal decorative component is formed with at least one mounting hole, one of the at least one camera is disposed in a corresponding one of the at least one mounting hole, and the near field communication coil is arranged around the metal decorative component.

23. The electronic device according to claim 22, wherein the metal decorative component is disposed with a third slot, the third slot penetrates through the metal decorative component to divide the metal decorative component into two parts, and the third slot is communicated with the mounting hole to thereby make a direction of an induced current generated in the metal decorative component be perpendicular to a direction of transmitting the differential excitation current by the near field communication coil.

24. The electronic device according to claim 16, wherein the camera module comprises a first camera, a second camera, a third camera and a metal decorative component;
wherein the metal decorative component is formed with a first mounting hole, a second mounting hole and a third mounting hole spaced apart, the first camera is disposed in the first mounting hole, the second camera is disposed in the second mounting hole, the third camera is disposed in the third mounting hole, and the near field communication coil is arranged around the metal decorative component.

25. The electronic device according to claim 24, wherein the metal decorative component is further disposed with a fourth slot, a fifth slot and a sixth slot; the fourth slot penetrates through the metal decorative component to divide the metal decorative component into two parts, the fifth slot is located between the first mounting hole and the second mounting hole, and the sixth slot is located between the second mounting hole and the third mounting hole; and the fourth slot, the fifth slot, the sixth slot, the first mounting hole, the second mounting hole, and the third mounting hole are intercommunicated to thereby make a direction of an induced current generated in the metal decorative component be perpendicular to a direction of transmitting the differential excitation current by the near field communication coil.
